# EUROPÄISCHE PATENTSCHRIFT

(11) **EP 0 988 329 B1**
(45) Veröffentlichungstag und Bekanntmachung des Hinweises auf die Patenterteilung: **06.11.2002**
(21) Anmeldenummer: 98936328.8
(22) Anmeldetag: 12.06.1998
(51) Int. Cl.: C08F 210/00, H01G 7/02, D01F 6/04, B32B 15/08, B32B 31/28

(54) **ELEKTRETE**
ELECTRETS
ELECTRETS

(30) Priorität: 13.06.1997 DE 19725253; 19.05.1998 DE 19822381
(43) Veröffentlichungstag der Anmeldung: 29.03.2000
(73) Patentinhaber: Ticona GmbH, 65451 Kelsterbach (DE)
(72) Erfinder: HATKE, Wilfried, D-65719 Hofheim (DE); SESSLER, Gerhard, D-64285 Darmstadt (DE); YANG, Guo-Mao, D-64291 Darmstadt (DE)
(86) Internationale Anmeldenummer: EP9803537
(87) Internationale Veröffentlichungsnummer: WO98056836

(56) Entgegenhaltungen:
- EP-A- 0 769 371
- EP-A- 0 844 077
- DD-A- 211 801
- US-A- 3 711 941
- US-A- 4 944 854
- PATENT ABSTRACTS OF JAPAN vol. 096, no. 006, 28. Juni 1996 & JP 08 041260 A (MITSUI PETROCHEM IND LTD), 13. Februar 1996 & DATABASE WPI Derwent Publications Ltd., London, GB; AN 96-157202
- PATENT ABSTRACTS OF JAPAN vol. 017, no. 167 (C-1043), 31. März 1993 & JP 04 326910 A (TOYOBO CO LTD), 16. November 1992 & DATABASE WPI Derwent Publications Ltd., London, GB; AN 92-429805 A

## Beschreibung

Die vorliegende Erfindung betrifft Elektrete, Verfahren zu deren Herstellung und deren Verwendung als Folien.

Elektrete sind Materialien mit einer permanenten elektrischen Polarisation, ähnlich der permanenten magnetischen Polarisation bei ferromagnetischen Stoffen. Der Begriff wird aber zum Beispiel auch für Materialien gebraucht, die entgegengesetzte Ladungen auf ihren Oberflächen aufweisen, wie bei Folien; vgl. R.C. Brown et al; J. Aerosol. Sci., Vol. 25, No. 1, Seite 149,1994.

Die Fähigkeit Ladungen im Inneren oder an der Oberfläche über längere Zeiträume zu speichern ist vor allem auf dem Gebiet der Partikelfiltration von hohem Interesse. Elektrete zeigen vor allem bei kleinen Partikeln im Vergleich zu ungeladenen Filtermedien eine deutlich höhere Effizienz bei der Partikelabscheidung aus einem zu filternden Medium, wie Gas oder Flüssigkeit. Als Materialien zur Herstellung von Elektreten eignen sich besonders solche, die isolierende Eigenschaften besitzen. Aufgrund ihrer hohen elektrischen Widerstände und ihrer guten Verarbeitbarkeit eignen sich deshalb Polymere besonders gut zur Herstellung von Elektreten.

Das Verhalten von Elektreten ist abhängig von der Natur des verwendeten Polymeren. US-A-4,288,584 beschreibt die Herstellung von Elektreten auf der Basis von Polymeren wie Polycarbonat und Polyester. Das anfänglich hohe Oberfächenpotential von Elektreten aus diesen Polymeren nimmt jedoch relativ schnell wieder ab. Dies gilt vor allem für hohe Luftfeuchtigkeit. Elektrete auf der Basis von einfachen Polyolefinen werden auch beschrieben. Die Oberflächenpotentiale von Elektreten auf der Basis dieser Polymere wird vor allem bei höheren Temperaturen als nicht sehr stabil beschrieben.

Eine Verbesserung der Stabilität von Elekretladungen durch die Addition von Polymeren mit polaren Seitengruppen wird in der JP-A-08 41260 beschrieben. Die erfindungsgemäßen Elektrete auf der Basis von Copolymeren mit cyclischen Olefinen werden jedoch nur über sehr kurze Zeiträume untersucht. Außerdem ist trotz dieser kurzen Zeiträume, bis zu 24 Stunden, schon eine teilweise recht deutliche Abnahme von 10-15% der Oberflächenpotentiale zu beobachten.

J. van Thournhout beschreibt, daß die Elektreteigenschaften von Polyolefinen wie Polypropylen nicht durch den Zusatz von polaren Polymeren oder Polymeren mit polaren Seitengruppen verbessert werden können, vgl. Conference Proceedings of the Dielectrics and Electrical Insulation Society, J. van Thournhout et al; S. 961-966 (1994).

Die Forderung nach Materialien, deren Elektreteigenschaften auch bei sehr hohen Temperaturen und Luftfeuchtigkeit behalten wird, bestand daher weiter. Bis heute lassen sich diese Anforderungen nur befriedigend mit Flourpolymeren wie dem Polytetraflouroethylen (PTFE) erfüllen. Der hohe Preis und die speziellen Verarbeitungsbedingungen für diese Polymere verhindern jedoch zur Zeit den Einsatz dieser Materialien für viele Elekretanwendungen. Es bestand deshalb weiterhin ein hohes Interesse an Materialien für Elektrete, die auch bei hohen Temperaturen und Luftfeuchtigkeit keine oder nur eine geringe Abnahme ihrer Ladungen zeigen und die einfach zu verarbeiten sind.

Die Aufgabe der vorliegenden Erfindung besteht darin, Elektrete bereitzustellen, die bei hohen Temperaturen und hohen Luftfeuchtigkeit keine oder nur geringe Abnahme ihrer Ladungen zeigen, sowie ein wirtschaftliches und umweltfreundliches Verfahren zur Herstellung von Elektreten bereitzustellen.

Die Aufgabe der vorliegenden Erfindung wird gelöst durch Elektrete, enthaltend als Polymer nur mindestens ein Cycloolefincopolymer, ausgewählt aus Polymeren enthaltend 0,1 bis 100 Gew.-%, bevorzugt 0,1 bis 99,9 Gew.-%, bezogen auf die Gesamtmasse des Cycloolefinpolymers, polymerisierte Einheiten mindestens eines cyclischen Olefins der Formeln I, II, II', III, IV, V oder VI 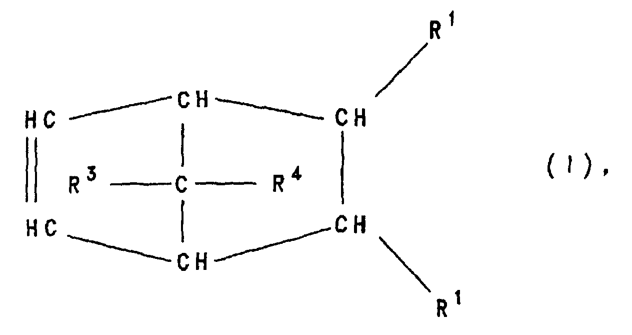 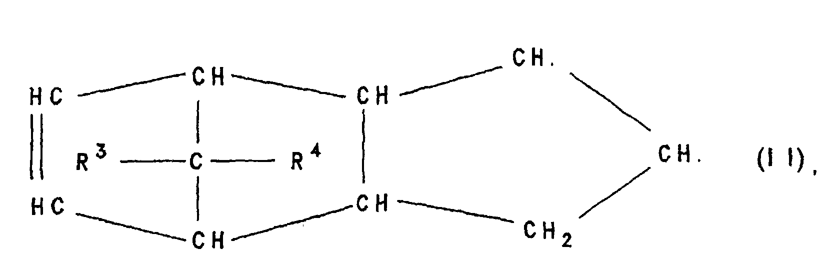 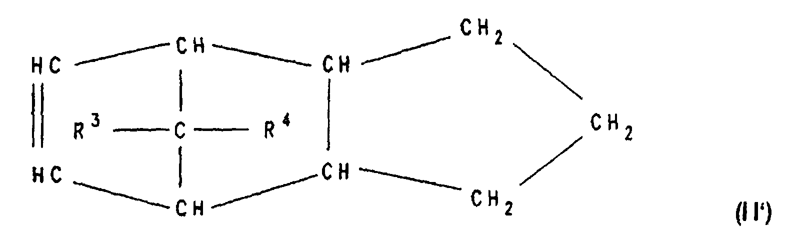 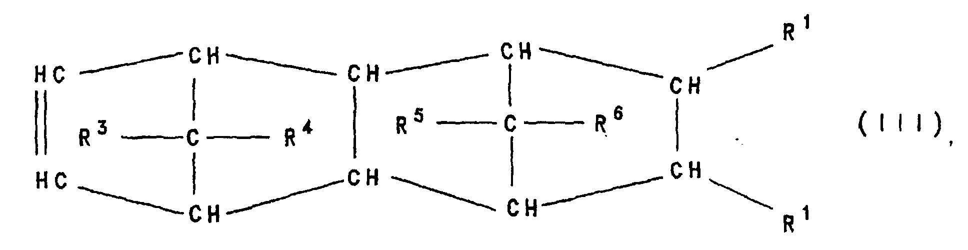 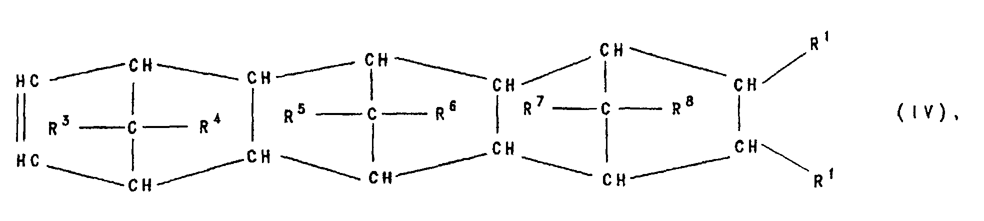 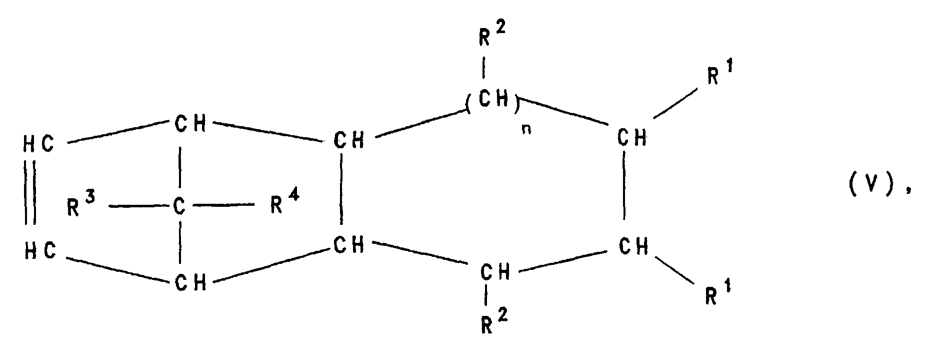 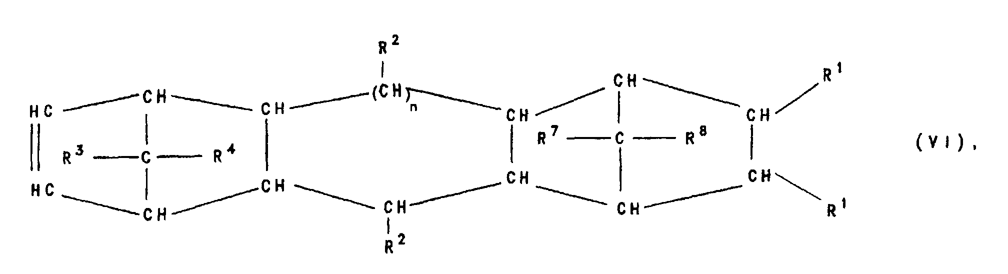 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
0 bis 99 mol-%, bezogen auf die Gesamtzusammensetzung des Cycloolefincopolymers, polymerisierte Einheiten, welche sich ableiten von einem oder mehreren acyclischen Olefinen der Formel VII 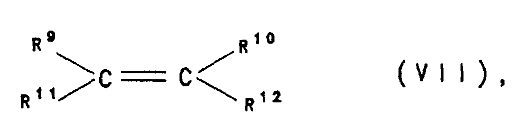 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Die Cycloolefinpolymere können auch durch ringöffnende Polymerisation mindestens eines der Monomere mit den Formeln I bis VI und anschließender Hydrierung der erhaltenen Produkte erhalten werden. 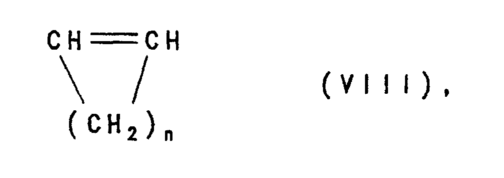 worin n eine Zahl von 2 bis 10 ist.

Der Anteil der polymerisierten Einheiten, die sich ableiten von cyclischen, insbesondere polycyclischen Olefinen beträgt bevorzugt 3 bis 75 mol-% bezogen auf die Gesamtzusammensetzung des Cycloolefincopolymers. Der Anteil der polymerisierten Einheiten, die sich ableiten von acyclischen Olefinen beträgt bevorzugt 5 bis 80 mol-% bezogen auf die Gesamtzusammensetzung des Cycloolefincopolymers.

Bevorzugt bestehen die Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die erfindungsgemäßen Cycloolefinpolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt Norbornen/Vinylnorbonen Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefincopolymers. Bei den Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefincopolymers.

Das erfindungsgemäße Cycloolefincopolymer enthält vorzugsweise mindestens ein Cycloolefincopolymer, welches polymerisierte Einheiten enthält, die sich ableiten lassen von polycyclischen Olefinen der Formeln I, und polymerisierte Einheiten, die sich ableiten lassen von acyclischen Olefinen der Formel VII,

Die Herstellung der Cycloolefinpolymere geschieht durch eine heterogene oder homogene Katalyse mit metallorganischen Verbindungen. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von Cycloolefincopolymeren beschriebenen Herstellungsverfahren und verwendeten Katalysatorsysteme wird hiermit ausdrücklich Bezug genommen.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-(cyclopentadienyl)-zirkondichlorid,
Isopropylen-(9-fluorenyl)-(cyclopentadienyl)-zirkondichlorid,
rac-lsopropyliden-bis-(1-indenyl)zirkondichlorid
Phenylmethylmethylen-(9-fluorenyl)-(cyclopentadienyl)-zirkondichlorid,
lsopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
lsopropylen-(9-fluorenyl)(1-(3-tert.-butyl)cyclopentadienyl)-zirkondichlorid,
lsopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
lsopropylen-(methylcyclopentadienyl)-(1-indenyl)-zirkondichlorid,
[4-(η⁵-cyclopentadienyl)-4,7,7-trimethyl-(η⁵-4,5,6,7-tetrahydroindenyl)]zirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl)]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichlorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid,
[2,2,4Trimethyl-4-(η⁵-cyclopentadienyl)-(η⁵-4,5-tetrahydropentalen)]-zirkoniumdichlorid,
[2,2,4Trimethyl-4-(η⁵-(3,4-Di-isopropyl)cyclopentadienyl)-(η⁵-4,5-tetrahydropentalen)]zirkoniumdichlorid.

Cycloolefincopolymere auf der Basis von Comonomeren, wie Ethylen und 2-Norbornen sind amorphe Kunststoffe. Die Wärmeformbeständigkeit der Cycloolefincopolymere läßt sich durch die Variation der Anteile der Comonomer in einem weiten Bereich einstellen. Als Anhaltspunkt für die Wärmeformbeständigkeit, wie sie nach ISO 75 Teil 1 und Teil 2 an Spritzgußformkörpern bestimmt werden kann, läßt sich für amorphe Cycloolefincopolymere die Glasübergangstemperatur heranziehen. Die HDT-B der Cycloolefincopolymere liegt etwa 5 °C bis 20 °C unterhalb der Glasübergangstemperatur. Cycloolefincopolymere können HDT-B von 20 °C bis 250 °C, bevorzugt von 50 °C bis 180 °C aufweisen. Aufgrund der Einstellbarkeit der Wärmeformbeständigkeit kann sie dem jeweiligen Verwendungszweck angepaßt werden.

Cycloolefincopolymere sind thermoplastische Materialien. Sie lassen sich deshalb mit allen bekannten Verfahren zur Verarbeitung von thermoplastischen Polymeren verarbeiten. Dazu zählen unter anderem Extrudieren von Folien und Fasern, Extrusionsblasformen von Folien und Flaschen, Spritzblasformen, Spritzgießen und Kalandrieren. Die Fließfähigkeiten der Schmelzen lassen sich über die Variation der Glasstufen und der Molekulargewichte einstellen und an die Bedingungen der Verarbeitungsmethode anpassen.

Cycloolefincopolymere lassen sich durch Extrusion zu Flachfolien verarbeiten, die anschließend unter geeigneten Bedingungen biaxial oder monoaxial verstreckt werden können. Ebenso lassen sich Cycloolefincopolymere zu Fasern verspinnen. Cycloolefincopolymere lassen sich deshalb mit den gängigen Verfahren wie dem Split fiber-Verfahren, oder dem Melt blow-Verfahren zu Elektretfliesen verarbeiten.

Cycloolefincopolymere lassen sich auch aus der Lösung verarbeiten. Geeignete Lösungsmittel sind aprotische unpolare Kohlenwasserstoffe wie Dekalin oder Gemische aus linearen und verzweigten Kohlenwasserstoffen. Cycloolefincopolymer-Fliese können durch Verspinnen aus Polymerlösungen hergestellt werden.

Cycloolefincopolymer-Folien zeichnen sich durch spezielle mechanische Eigenschaften aus. Nach dem Verstrecken besitzen die Cycloolefincopolymer-Folien ein zähduktiles Eigenschaftsprofil. Die Reißdehnung und die Durchstoßfestigkeit der Folien sind signifikant erhöht. Ausgehend von einem relativ hohen Niveau der Elastizitätsmoduln für die unverstreckten Folien werden Elastizitätsmoduln von 3,5 GPa bis 4,3 GPa und Reißfestigkeiten von bis zu 160 MPa erreicht. Cycloolefincopolymer-Folien weisen deshalb geringe Unterschiede der Moduli und Festigkeiten zwischen verstreckten und unverstreckten Folien auf. Sie erlauben daher die Herstellung von Folien mit relativ isotropen mechanischen Eigenschaften. Vor allem der hohe Modul in Längsrichtung ist für eine geringe Dehnung der Folie durch Zugbelastungen bei der Weiterverarbeitung interessant.

Polymere auf der Basis von Copolymeren aus Ethylen und cyclischen Olefinen, wie dem 2-Norbornen, zeigen Elektreteigenschaften die mit denen des bislang besten Polymermaterials für Elektrete, dem Polytetrafluoroethylen, vergleichbar sind. Solche Cycloolefincopolymere lassen sich jedoch durch die bekannten Verarbeitungsmethoden, wie Extrudieren oder Spritzgießen wesentlich einfacher verarbeiten als Polytetrafluoroethylen.

Die Wärmeformbeständigkeit der Cycloolefincopolymere läßt sich durch die Variation der Anteile der Comonomer in einem weiten Bereich einstellen. Als Anhaltspunkt für die Wärmeformbeständigkeit, wie sie nach DIN- Norm an Spritzgußformkörpern bestimmt werden kann, läßt sich für amorphe Cycloolefincopolymere die Glasübergangstemperatur heranziehen. Die HDT-B der Cycloolefincopolymere liegt bei etwa 5 °C bis 20 °C unterhalb der Glasübergangstemperatur. Cycloolefincopolymere können HDT-B von 20 °C bis 250 °C, bevorzugt von 50 °C bis 180 °C aufweisen. Aufgrund der Einstellbarkeit der Wärmefrombeständigkeit kann die HDT-B dem jeweiligen Verwendungszweck angepaßt werden.

Cycloolefincopolymere sind thermoplastisch verarbeitbare Materialien. Sie lassen sich deshalb mit allen bekannten Verfahren zur Verarbeitung von thermoplastischen Polymeren verarbeiten. Dazu zählen unter anderem: Extrudieren von Folien und Fasern, Extrusionsblasformen von Folien und Flaschen, Spritzblasformen, Spritzgießen und Kalandrieren. Die Fließfähigkeiten der Schmelzen lassen sich über die Variation der Glasstufen und der Molekulargewichte einstellen und an die Bedingungen der Verarbeitungsmethode anpassen.

Cycloolefincopolymere lassen sich durch Extrusion zu Flachfolien verarbeiten, die anschließend unter geeigneten Bedingungen biaxial oder monoaxial verstreckt werden können. Ebenso lassen sich Cycloolefincopolymere zu Fasern verspinnen. Cycloolefincopolymere lassen sich deshalb mit den gängigen Verfahren wie dem Split fiber-Verfahren, oder dem melt blow-Verfahren zu Elektretfliesen verarbeiten.

Cycloolefincopolymere lassen sich auch aus Lösungen verarbeiten. Geeignete Lösungsmittel sind aprotische unpolare Kohlenwasserstoffe wie Dekalin oder Gemische aus linearen und verzweigten Kohlenwasserstoffen. Cycloolefincopolymer-Fliese können durch Verspinnen aus Polymerlösungen hergestellt werden.

Die Folien, Faser und Fliesen können zu Filtern weiterverarbeitet werden.

In den Beispielen zur Untersuchung der Elektreteigenschaften von Cycloolefincopolymeren wurden amorphe Cycloolefincopolymere mit Glasstufen von 140 °C und 160 °C sowie ein teilkristallines Cycloolefincopolymer mit einer Glasstufe von 135 °C und einem Schmelzpunkt von 285 °C untersucht.

Aus diesen Cycloolefincopolymeren werden durch Extrusion und anschließendes Verstrecken biaxial orientierte Filme hergestellt. Es wurden auch Mischungen außerhalb der Erfindung aus COC mit einem Glaspunkt von 140 °C und einem handelsüblichen Polypropylenhomopolymer (MFI(230 °C; 2,16 kg); 3,3 kg/10 min; Tₘ: 163 bis 166 °C von der Hoechst AG hergestellt. Die untersuchten Filme sind in Tabelle 1 zusammengefaßt

Zur Untersuchung der Elektreteigenschaften wurde auf jeweils eine Seite der Filme eine Aluminiumschicht von 100 nm Dicke aufgebracht. Die Filme wurden auf ihrer nicht metallisierten Seite mit einer Koronaentladung oder durch Beschuß mit einem Elektronenstrahl aufgeladen.

Die Stärke des elektrischen Feldes, die einer isolierenden Schicht eines Polymeren widerstehen kann, wird über die Ermittlung der sogenannten elektrischen Durchschlagfestigkeit abgeschätzt. Dazu wird ein dünner, möglichst homogener, Film des Materials zwischen zwei Elektroden (Kugel/Platte)Anordnung gebracht Die Spannung, die zwischen den Elektroden anliegt, wird kontinuierlich erhöht bis es zu einem elektrischen Durchbruch durch die Folie kommt. Die Spannung bei Durchbruch durch den Film wird ermittelt. In solchen Versuchen wurde die elektrische Durchschlagfestigkeit von biaxial orientierten Folien gemessen. Sie betrug 400 bis 500 kV/mm bei Anlegen von Wechselspannung und 600 bis 700 kV/mm bei Anlegen von Gleichspannung. Die Ergebnisse zeigen, daß COC deutlich höhere Oberflächenladungen speichern kann.

In den Beispielen wurde die Koronaentladung bei Raumtemperatur mit einer Koronatriode, bestehend aus einer Nadelelektrode, einem Gitter und der Filmprobe durchgeführt Im allgemeinen wurden Proben von Filmen positiv oder negativ mit einem elektrischen Feld von 10 KV/mm aufgeladen. Die resultierenden Oberflächenspannungen lagen je nach der Dicke des Films im Bereich von 100 V bis 500 V.

In den Beispielen wurde die Aufladung mit dem Elektronenstrahl im Vakuum bei Raumtemperatur mit einem 10 keV Elektronenstrahl durchgeführt. Die Oberflächenspannungen wurden wiederum so gewählt, daß das elektrische Feld im Bereich von 10 kV/mm lag.

In solchen Versuchen ergaben sich für biaxial orientierte COC-Filme Werte von 400 bis 500 kV/mm bei Anlegen einer Wechselspannung und 600 bis 700 kV/mm bei Anlegen von Gleichspannung.

In den Beispielen wurden verschiedene Experimente zur Bestimmung des Verhaltens der aufgebrachten Ladung durchgeführt. Vor allem das Abklingverhalten der aufgebrachten Ladungen als Funktion der Zeit ist für das Verhalten von Elektreten wichtig. In den Beispielen werden die Elektreteigenschaften von biaxial orientierten Polypropylenfolien (PP), biaxial orientierten Polyethylenterephthalatfolien (PET) und Folien aus den Fluorpolymeren Teflon FEP (Fluor-Ethylen-Propylen-Polymer) und Teflon TFE (Tetrafluorethylen) im Vergleich zu Cycloolefincopolymer-Folien untersucht. Tabelle 1 listet die untersuchten Materialien auf.

Die Erfindung wird anhand von Abbildungen und Beispielen näher erläutert.

### Abbildungen

Es zeigen
- Abb. 1:: Darstellung des normalisierten Oberflächenpotentials als Funktion der Zeit bei Raumtemperatur und Umgebungsfeuchte (50 bis 60 %),
- Abb. 2:: Darstellung des normalisierten Oberflächenpotentials als Funktion der Zeit bei Raumtemperatur und 95 % relativer Feuchte,
- Abb. 3:: Darstellung des normalisierten Oberflächenpotentials als Funktion der Zeit für positiv aufgeladene Filme bei 80 °C und 90 % relativer Feuchte,
- Abb. 4:: Darstellung des normalisierten Oberflächenpotentials als Funktion der Zeit für negativ aufgeladene Filme bei 80 °C und 90 % relativer Feuchte,
- Abb. 5:: Darstellung des normalisierten Oberflächenpotentials als Funktion der Zeit für positiv aufgeladene Filme bei 130 °C und Umgebungsfeuchte (50 bis 60 %),
- Abb. 6:: Darstellung des normalisierten Oberflächenpotentials als Funktion der Zeit für negativ aufgeladene Filme bei 130 °C und Umgebungsfeuchte (50 bis 60 %),
- Abb. 7:: Thermisch induzierter Strom für COC 5 und Teflon FEP als Funktion der Temperatur,
- Abb. 8:: Darstellung des normalisierten Oberflächenpotentials für positive aufgeladene Filme als Funktion der Zeit bei 80 °C und 90% relativer Feuchte,
- Abb. 9:: Darstellung des normalisierten Oberflächenpotentials für positive aufgeladene Filme als Funktion der Zeit bei 80°C und 90% relativer Feuchte,
- Abb. 10:: Darstellung des normalisierten Oberflächenpotentials für negativ aufgeladene Filme als Funktion der Zeit bei 80°C und 90% relativer Feuchte,
- Abb.11:: Darstellung des normalisierten Oberflächenpotentials für negativ aufgeladene Filme als Funktion der Zeit bei 80 °C und 90% relativer Feuchte.

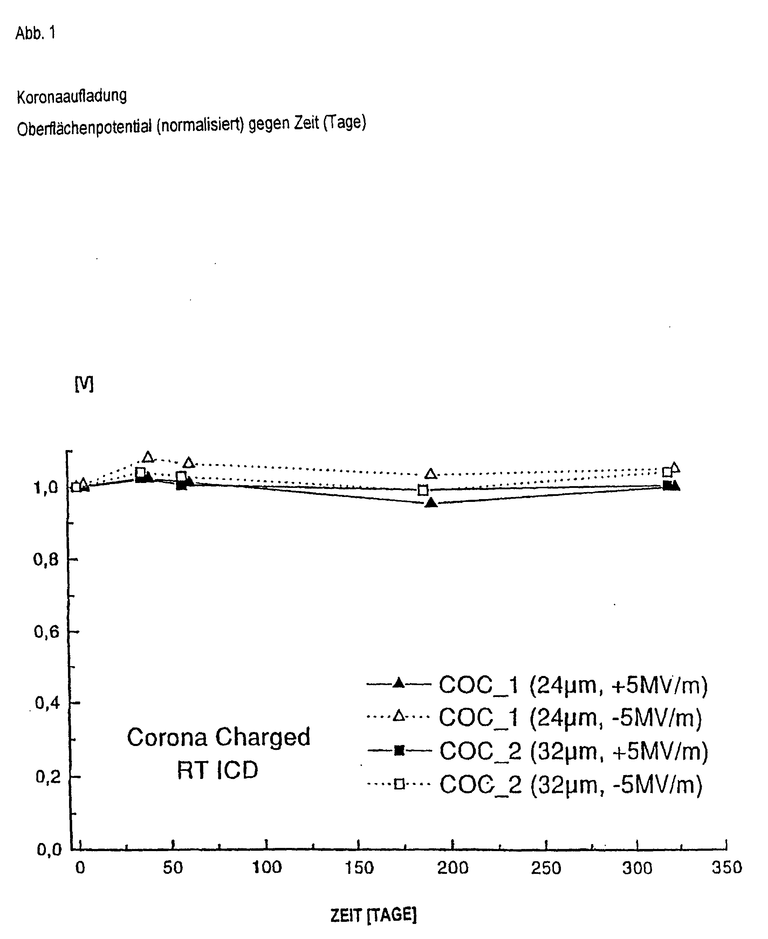

Cycloolefincopolymer-Filme mit positiven und negativen aufgebrachten Ladungen besitzen bei Raumtemperatur eine sehr hohe Stabilität der Ladungen, wie in Abb. 1 dargestellt wird. Bei einer Aufladungsfeldstärke von 5 kV/mm sind nach einer Lagerung bei Raumtemperatur und Umgebungsfeuchte (50 bis 60 % Luftfeuchtigkeit) nach 350 Tagen Oberflächenpotentiale im Bereich von 98% bis 100% des ursprünglichen Oberflächenpotentials vorhanden.

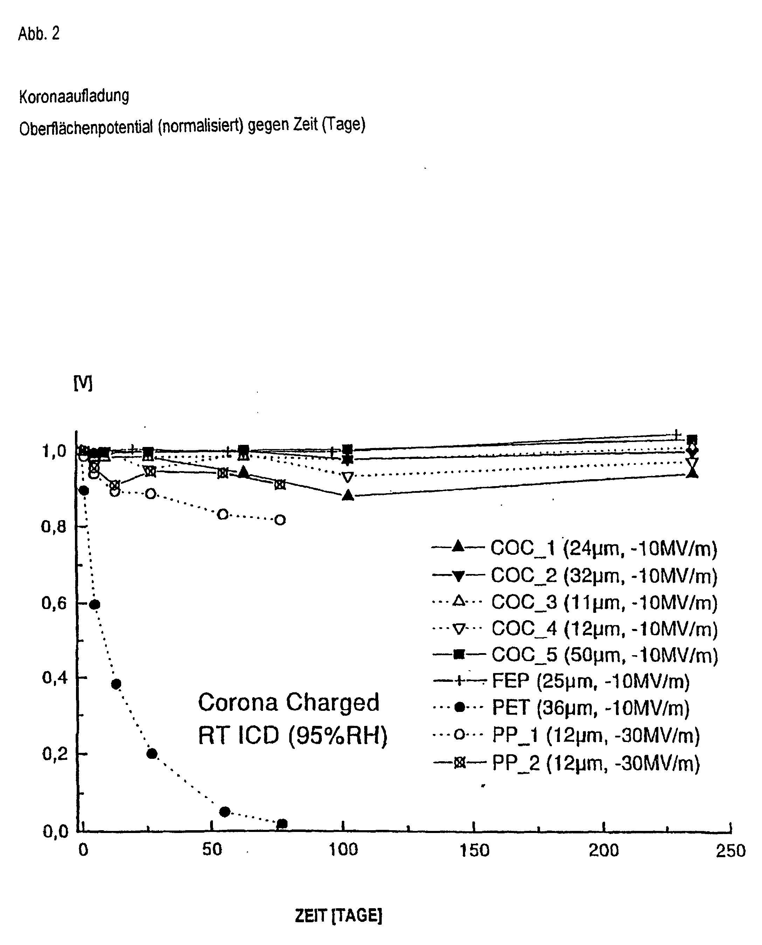

Abb. 2 zeigt, daß die negativ aufgeladenen Cycloolefincopolymer-Filme 1-5 bei einer relativen Luftfeuchtigkeit von 95% keine oder nur eine sehr geringe Abnahme des Oberflächenpotentials erfolgt. Nach 250 Tagen liegt diese im Bereich von 90 % bis 100 % des ursprünglichen Oberflächenpotentials. Die zum Vergleich aufgenommenen Stabilitäten der Oberflächenpotentiale von Filmen aus Polyethylenterephthalat (PET) zeigen schon nach 75 Tagen eine deutliche Abnahme der Oberflächenpotentiale unter 10 % des ursprünglichen Wertes auf.

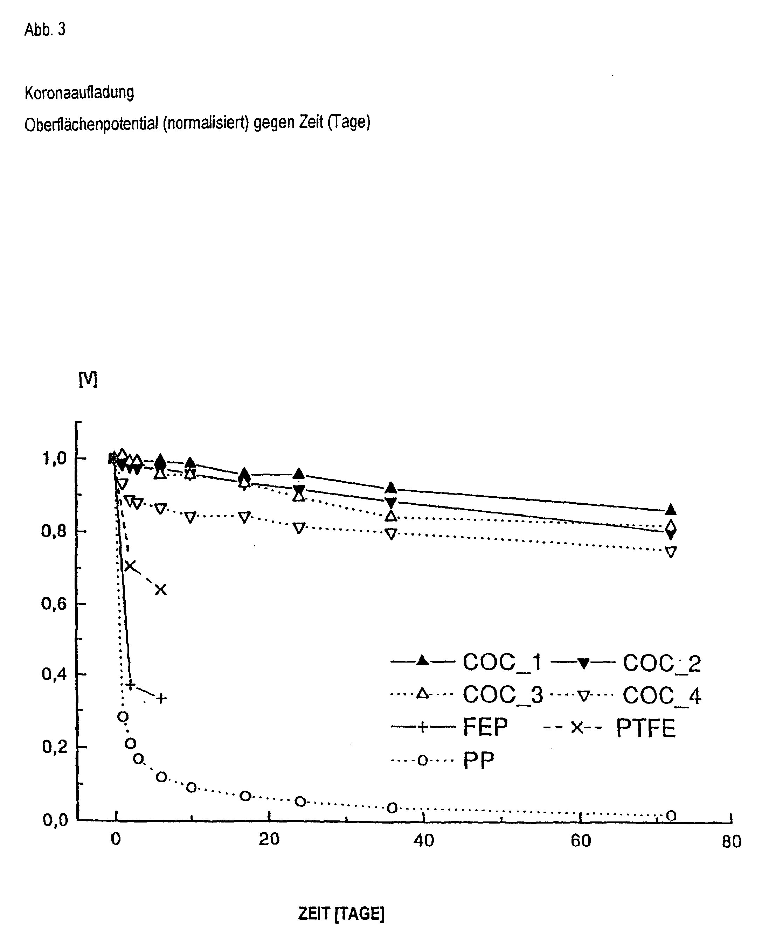

Abb. 3 zeigt, daß bei einer Temperatur von 80 °C und einer relativen Luftfeuchtigkeit von 90 % Cycloolefincopolymer-Filme, die positiv aufgeladen sind, nach 75 Tagen Oberflächenpotentiale zwischen 80 und 90 % de ursprünglichen Oberflächenpotentials zeigen. In diesem Zeitraum nehmen die Oberflächenpotentiale von PP, FEP und PTFE auf Werte zwischen 5 und 50% der ursprünglichen Werte ab.

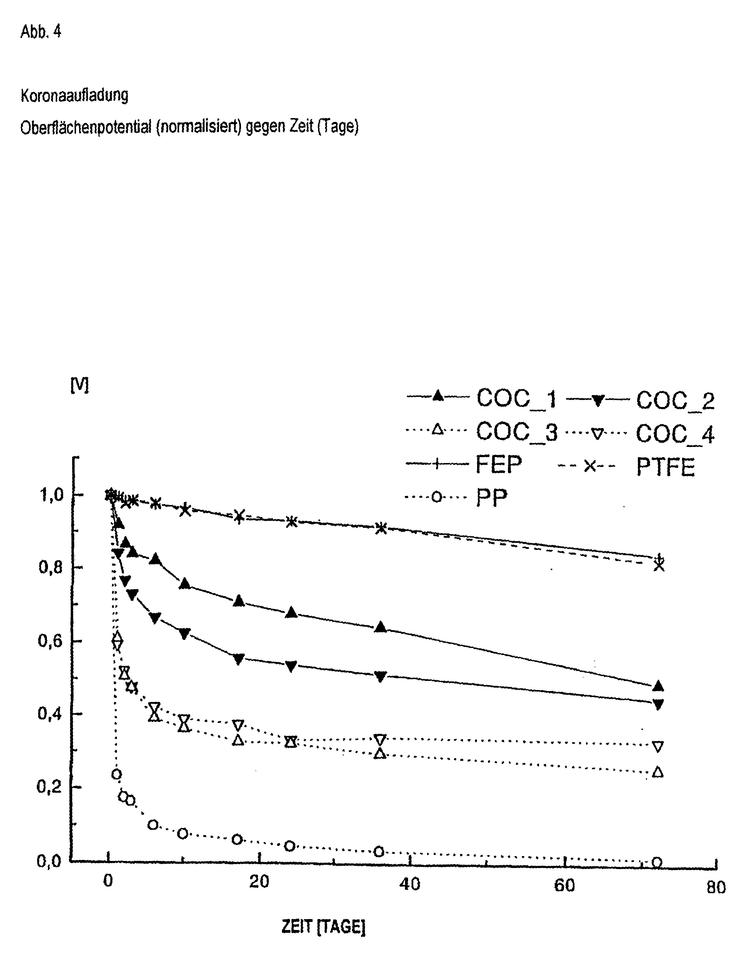

Abb. 4 zeigt, daß bei einer Temperatur von 80 °C und einer relativen Luftfeuchtigkeit von 90% Cycloolefincopolymer-Filme, die negativ aufgeladen sind, nach 75 Tagen Oberflächenpotentiale zwischen 50 und 60% der ursprünglichen Werte zeigen. In diesem Zeitraum nimmt das Oberflächenpotential von PP auf Werte unter 5% der ursprünglichen Werte ab.

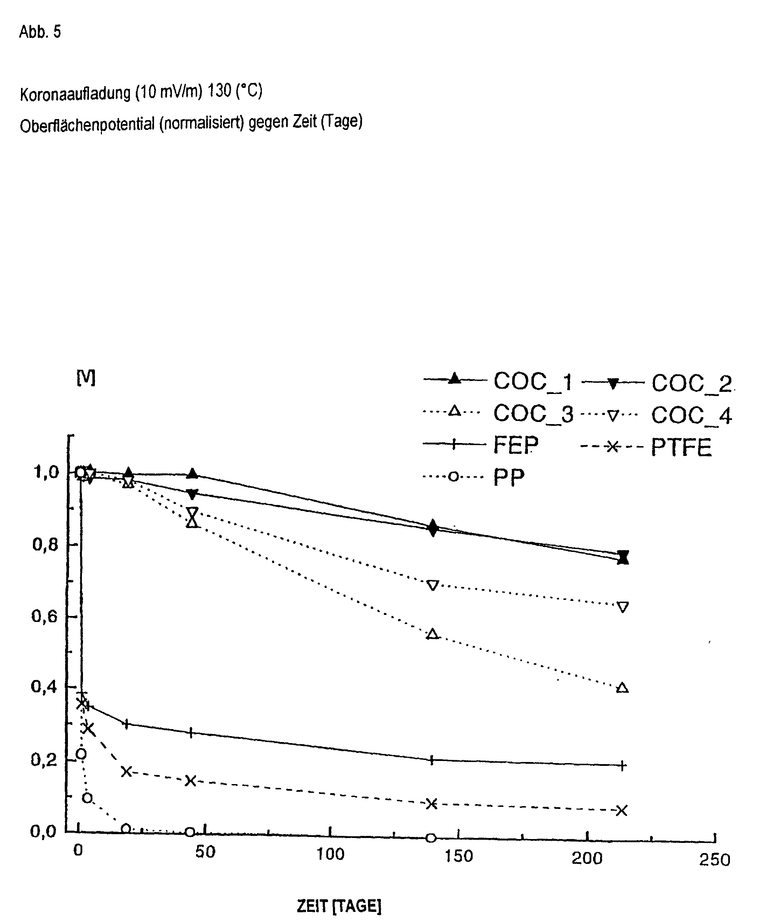

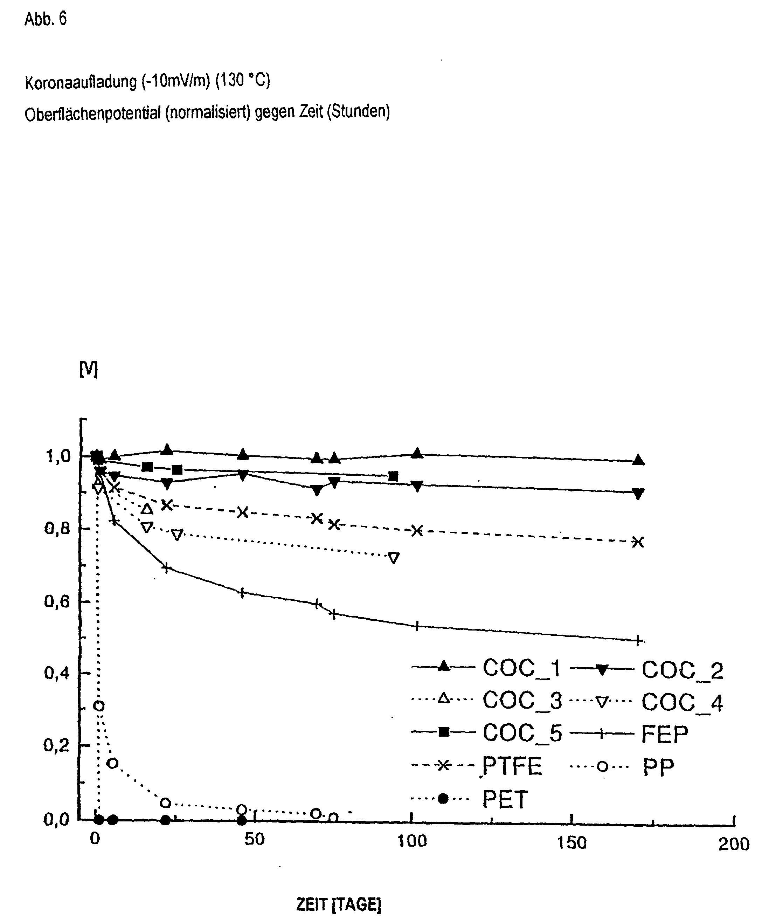

Abb. 5 und Abb. 6 zeigen, daß bei einer Temperatur von 130 °C und einer relativen Luftfeuchtigkeit von 50 bis 60 % Cycloolefincopolymer-Filme, die negativ oder positiv aufgeladen sind, nach 175 bis 220 Stunden Oberflächenpotentiale zwischen 50 % und 100% der ursprünglichen Werte zeigen. In diesem Zeitraum nimmt das Oberflächenpotential von PP und PET auf 0% des ursprünglichen Oberflächenpotentials ab.

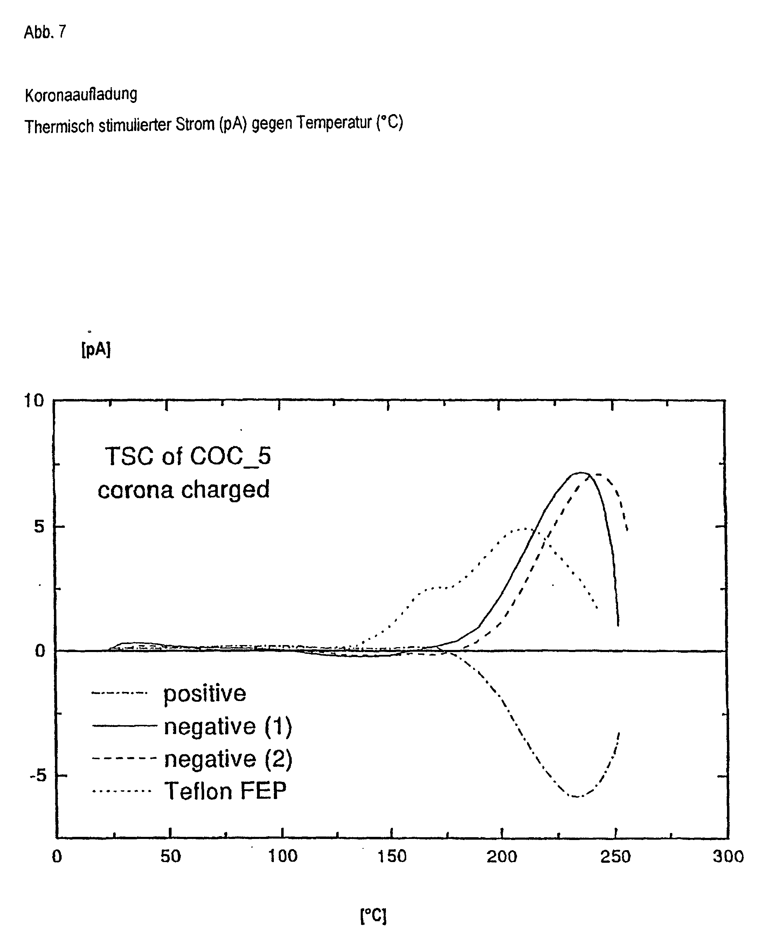

Abb. 7 zeigt Messungen zum thermisch induzierten Stromfluß am teilkristallinen COC 5 im Vergleich zu Teflon FEP. Die Messung wurde in einem offenen Stromkreis durchgeführt. Die Heizrate betrug 200 °C /h. Bis zu einer Temperatur von ca. 175 °C wird bei COC 5 im Vergleich zu Teflon FEP kein Stromfluß beobachtet. Das Maximum für den Stromfluß liegt bei einer Temperatur von 250 °C. Positiv und negativ geladene Filme aus COC-5 zeigen ein ähnliches Verhalten mit umgekehrtem Vorzeichen des Stromflusses.

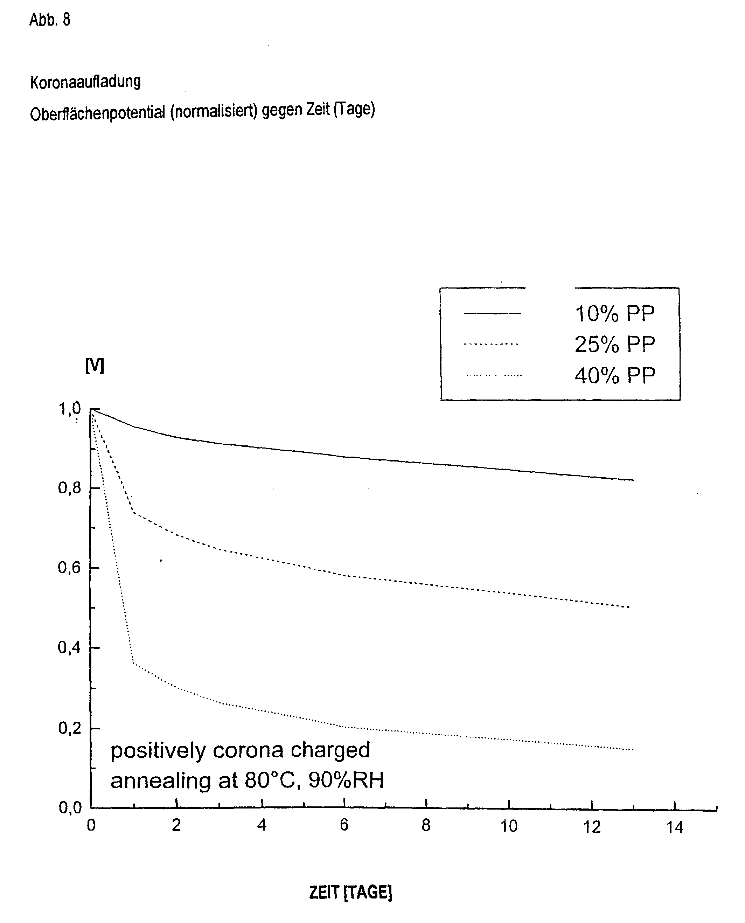

Abb. 8 zeigt, daß bei einer Temperatur von 80 °C und einer relativen Luftfeuchtigkeit von 90% durch Koronaaufladung positiv aufgeladene Filme aus Mischungen von Cycloolefincopolymeren mit Polypropylen nach 13 Tagen Oberflächenpotentiale von 20% bis 85% bezogen auf den Ausgangswert aufweisen. Dabei nimmt das beobachtete Oberflächenpotential mit zunehmendem Anteil an PP ab. Der höchste Wert wird mit 85% für einen Anteil von 10 Gew.-% PP beobachtet.

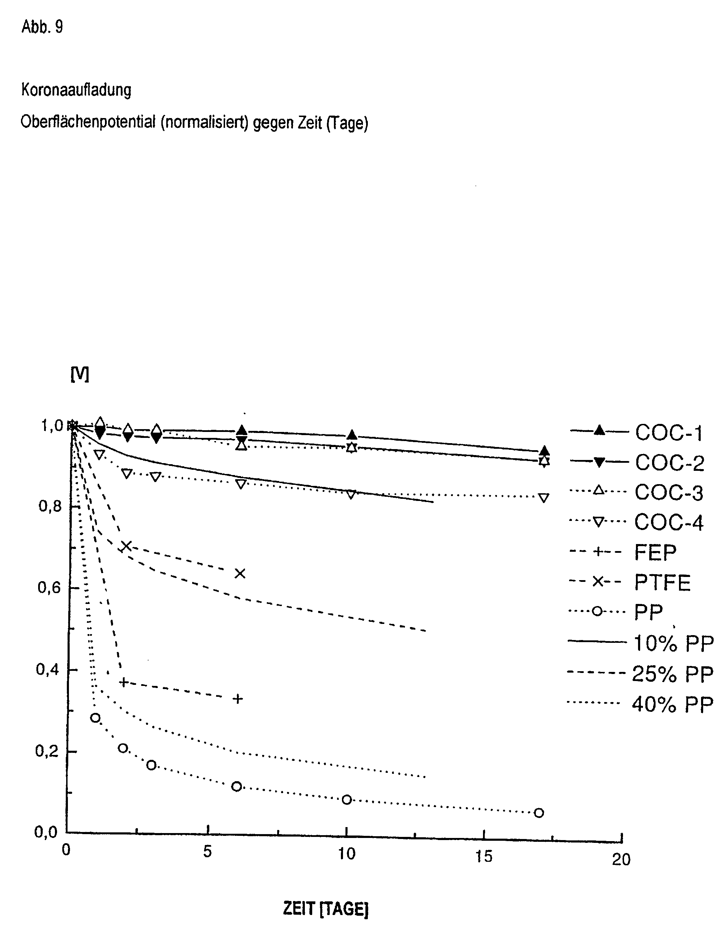

Abb. 9 zeigt, daß die Filme aus Abb. 8 nach 13 Tagen noch deutlich höhere Oberflächenpotentiale besitzen als Filme aus reinem Polypropylen, die unter identischen Bedingungen aufgeladen und gelagert wurden.

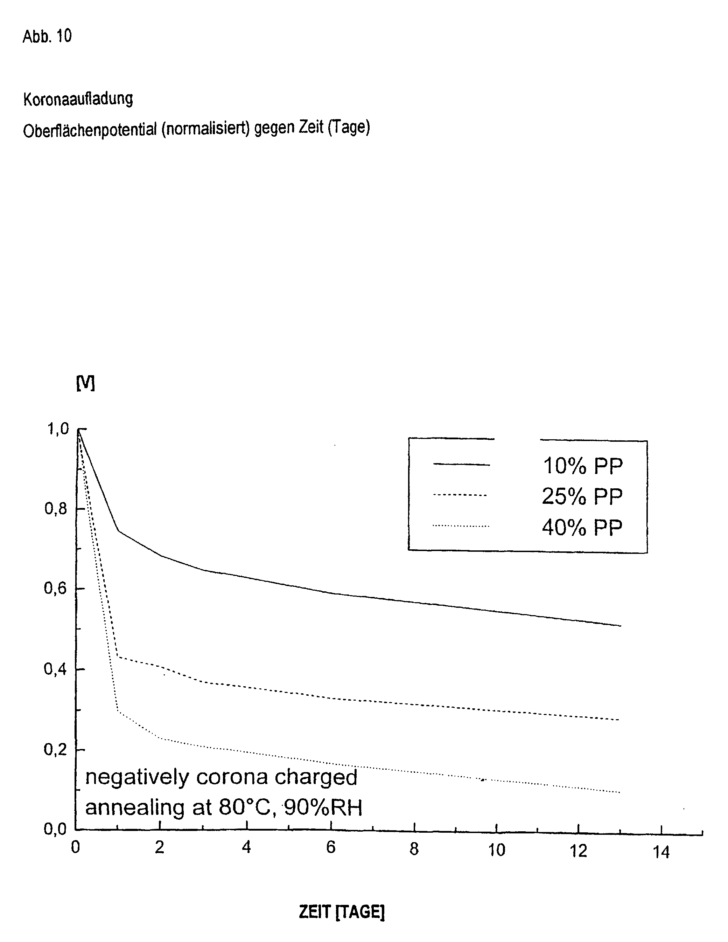

Abb. 10 zeigt, daß bei einer Temperatur von 80 °C und einer relativen Luftfeuchtigkeit von 90% durch Koronaaufladung negativ aufgeladene Filme aus Mischungen von Cycloolefincopolymeren mit Polypropylen nach 13 Tagen Oberflächenpotentiale von 15% bis 55% bezogen auf den Ausgangswert aufweisen. Dabei nimmt das beobachtete Oberflächenpotential mit zunehmendem Anteil an PP ab. Der höchste Wert wird mit 55% für einen Anteil von 10 Gew.-% PP beobachtet.

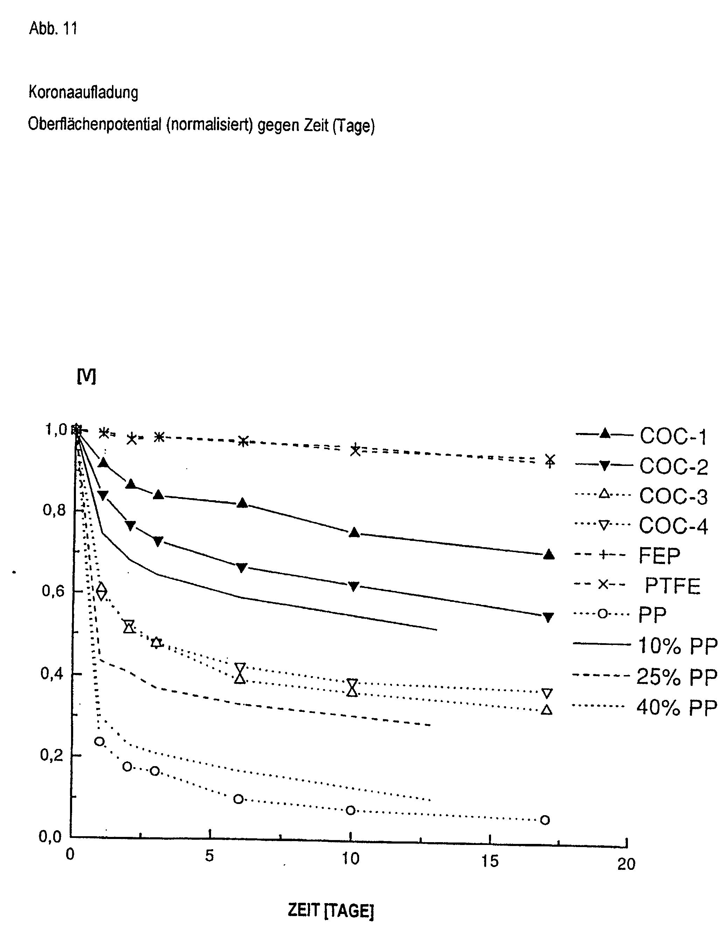

Abb. 11 zeigt, daß die Filme aus Abb. 10 nach 13 Tagen noch deutlich höhere Oberflächenpotentiale besitzen als Filme aus reinem Polypropylen, die unter identischen Bedingungen aufgeladen und gelagert wurden.

### Beispiele

Herstellung von geladenen Filmen 1 bis 5 bestehend aus Cycloolefincopolymeren sowie Filmen aus Mischungen von Cycloolefincopolymeren mit Polypropylen.

### Beispiel 1

### COC 1

Aus einem amorphen Cycloolefincopolymer enthaltend 53 Gew.-% Norbornen und 47 Gew.-% Ethylen mit einer Glasstufe von 140 °C wurde durch Extrusion und anschließendes Verstrecken ein biaxial orientierter Film mit einer Dicke von 24 µm hergestellt. Zur Untersuchung der Elektreteigenschaften wurde auf eine Seite des Filmes eine Aluminiumschicht von 100 nm Dicke aufgebracht. Der Film wurde auf der nicht metallisierten Seite mit einer Koronaentladung oder durch Beschuß mit einem Elektronenstrahl aufgeladen. Die Koronaentladung wurde bei Raumtemperatur mit einer Koronatriode durchgeführt. Die Koronatriode besteht aus einer Nadelelektrode, einem Gitter und der Filmprobe. Die Filmproben wurden positiv oder negativ mit einem elektrischen Feld von 5 und 10 KV/mm aufgeladen. Daraus ergaben sich Oberflächenpotentiale von 120 V und 240 V.

### Beispiel 2

### COC 2

Aus einem amorphen Cycloolefincopolymer, enthaltend 58 Gew.-% Norbornen und 42 Gew.-% Ethylen, mit einer Glasstufe von 160 °C wurde wie im Beispiel 1 beschrieben ein biaxial orientierter Film mit einer Dicke von 32 µm hergestellt und mit einem elektrischen Feld von 5 und 10 KV/mm aufgeladen. Daraus ergeben sich Oberflächenpotentiale von 160 V und 320 V.

### Beispiel 3

### COC 3

Aus einem amorphen Cycloolefincopolymer mit einer Glasstufe von 140 °C wurde wie im Beispiel 1 beschrieben ein biaxial orientierter Film mit einer Dicke von 11 µm hergestellt und mit elektrischem Feld von 10 KV/mm aufgeladen. Daraus ergab sich ein Oberflächenpotential von 110 V.

### Beispiel 4

### COC 4

Aus einem amorphen Cycloolefincopolymer mit einer Glasstufe von 160 °C wurde, wie im Beispiel 1 beschrieben, ein biaxial orientierter Film mit einer Dicke von 12 µm hergestellt und mit einem elektrischen Feld von 10 KV/mm aufgeladen. Daraus ergab sich ein Oberflächenpotential von 120 V.

### Beispiel 5

### COC 5

Aus einem teilkristallinen Cycloolefincopolymer enthaltend 50 Gew.-% Norbornen und 50 Gew.-% Ethylen mit einer Glasstufe von 135°C und einem Schmelzpunkt von 285 °C wurde, wie im Beispiel 1 beschrieben, ein biaxial orientierter Film mit einer Dicke von µm hergestellt und mit einem elektrischen Feld von 10 KV/mm aufgeladen. Daraus ergab sich ein Oberflächenpotential von 500 V.

### Beispiel 6 (außerhalb der Erfindung)

### 10% PP

Aus dem in Beispiel 1 beschriebenen COC-1 (90 Gew.-%) und 10 Gew.-% eines Polypropylenhomopolymers (Tm:163 bis 166 °C, MFI (230 °C, 2,16 kg): 3,3 g/10min) wurde wie unter Beispiel 1 beschrieben ein Film mit einer Dicke von 60(m hergestellt und mit einem elektrischen Feld von 10 kV/mm aufgeladen. Die erzielte Oberflächenspannung betrug 600 V.

### Beispiel 7 (außerhalb der Erfindung)

### 25% PP

Aus dem in Beispiel 1 beschriebenen COC-1 (75 Gew.-%) und 25 Gew.-% eines Polypropylenhomopolymers (Tm:162°C, MFI (230 °C, 2,16 kg): 3,3 g/10min) wurde wie unter Beispiel 1 beschrieben ein Film mit einer Dicke von 25 (µm hergestellt und mit einem elektrischen Feld von 10 kV/mm aufgeladen Die erzielte Oberflächenspannung betrug 250 V.

### Beispiel 8 (außerhalb der Erfindung)

### 40% PP

Aus dem in Beispiel 1 beschriebenen COC-1 (60 Gew.-%) und 40 Gew.-% eines Polypropylenhomopolymers (Tm:162°C, MFI (230°C, 2,16 kg): 3,3 g/10min) wurde wie unter Beispiel 1 beschrieben ein Film mit einer Dicke von 50 (µm hergestellt und mit einem elektrischen Feld von 10 kV/mm aufgeladen Die erzielte Oberflächenspannung betrug 500 V.

### Vergleichsbeispiele

### PP, FEP, PET und PTFE

Es wurden die Elektret-Eigenschaften von biaxial orientierten Polypropylenfolien (PP), biaxial orientierten Polyethylenterephthalatfolien (PET) und Folien aus den Fluorpolymeren Teflon FEP (Fluor-Ethylen-Propylen-Polymer) und Teflon PTFE (Tetrafluorethylen) im Vergleich zu Cycloolefincopolymer-Folien untersucht Die Folien wurden in Anlehnung an Beispiel 1 hergestellt und behandelt. Tabelle 1 listet die untersuchten Materialien auf.

**Tabelle 1:**

| Untersuchte Folien | | | | | |
|---|---|---|---|---|---|
| Material | Glasstufe ^{a)} [°C] | Schmelzpunkt ^{a)} [°C] | Additiv | Dicke [µm] | Bezeichnung |
| COC | 140 | - | - | 24 | COC 1 |
| COC | 160 | - | - | 32 | COC 2 |
| COC | 140 | - | ^{b)} | 11 | COC 3 |
| COC | 160 | - | b) | 12 | COC 4 |
| COC | 135 | 280 | - | 50 | COC 5 |
| COC 1 mit PP* | - | - | - | 60 | 10% PP |
| COC 1 mit PP* | - | - | - | 25 | 25% PP |
| COC 1 mit PP* | - | - | - | 50 | 40% PP |
| Polypropylenhomopolymer | - | - | - | 12 | PP |
| Polyethylenterephthalat | - | - | - | 36 | PET |
| Fluorethylenpropylenpolymer (Teflon FEP) | - | - | - | 25 | FEP |
| Polytetrafluorethylen (Teflon TFE) | - | - | - | 25 | PTFE |

| | | | | | |
|---|---|---|---|---|---|
| ^{a)} DSC-Messung, | | | | | |
| ^{b)} 0,2 Gew.-% Syloblock (Fa. Grace) | | | | | |
| * außerhalb der Erfindung | | | | | |

Die Stärke des elektrischen Feldes die eine isolierende Schicht eines Polymeren erträgt wird über die Ermittlung der sogenannten elektrischen Durchschlagfestigkeit abgeschätzt. Dazu wird ein dünner, möglichst homogener, Film des Materials zwischen eine Kugelplatte Elektroden Anordnung gebracht.

Die Spannung die zwischen den Elektroden anliegt wird kontinuierlich erhöht bis es zu einem elektrischen Durchbruch durch die Folie kommt. Die Spannung bei Durchbruch durch den Film wird ermittelt. In solchen Versuchen wurde die Werte der elektrischen Felder bei denen ein Durchbruch durch biaxial orientierten COC-Filmen zu 400 bis 500 kV/mm bei Anlegen von Wechselspannung und zu 600 bis 700 kV/mm bei Anlegen von Gleichspannung bestimmt. Die Werte der elektrischen Felder liegen am unteren Ende der möglichen elektrischen Felder für die Aufladung der COC-Filme.

## Patentansprüche

1. Elektret enthaltend als Polymer nur mindestens ein Cycloolefincopolymer, ausgewählt aus Polymeren enthaltend 0,1 bis 100 Gew.-%, bevorzugt 0,1 bis 99,9 Gew.-%, bezogen auf die Gesamtmasse des Cycloolefinpolymers, polymerisierte Einheiten mindestens eines cyclischen Olefins der Formeln I, II, II', III, IV, V oder VI 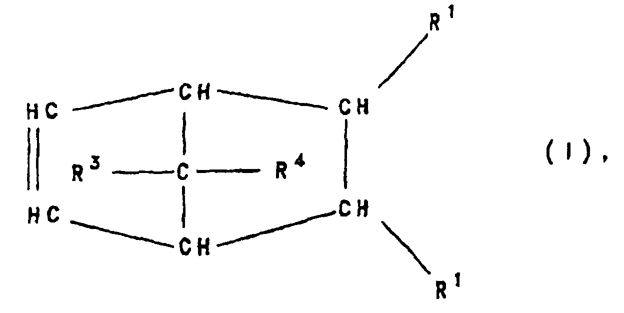 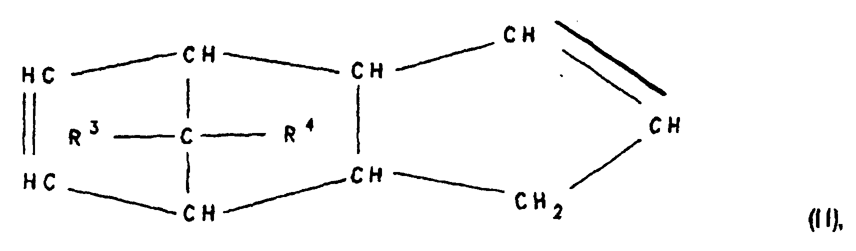 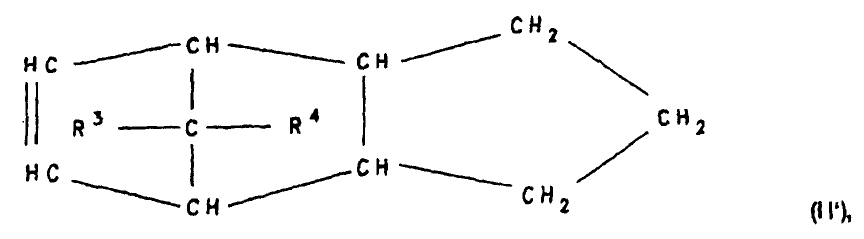 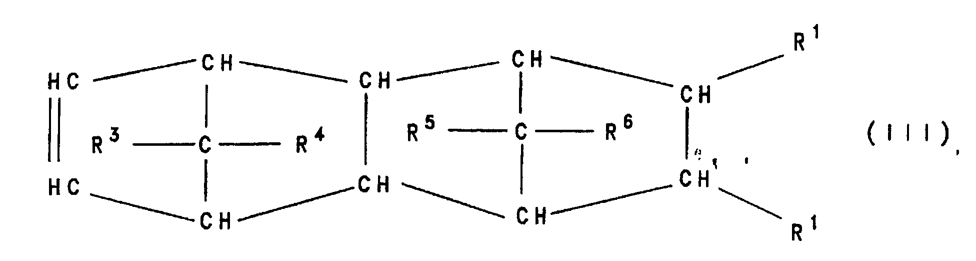 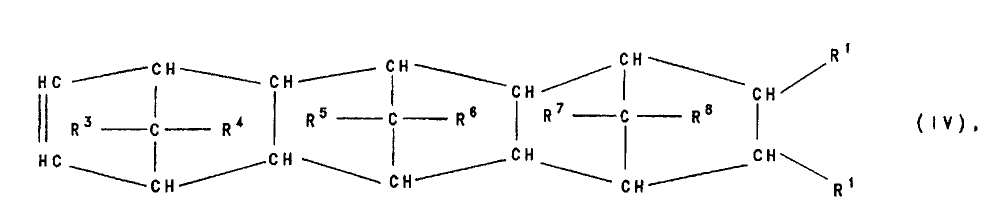 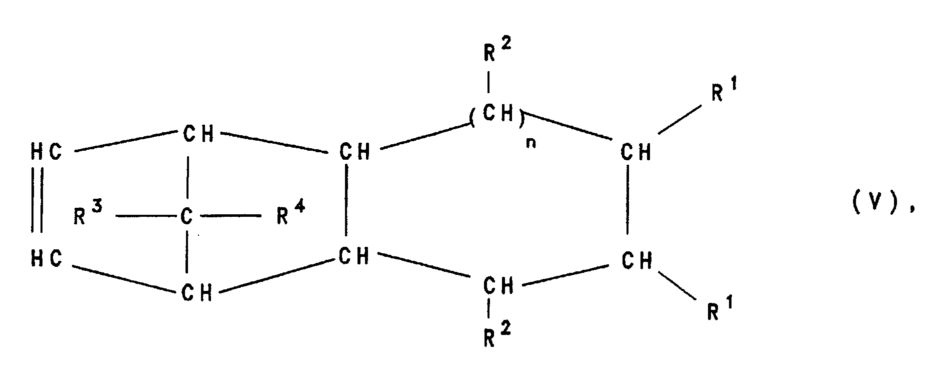 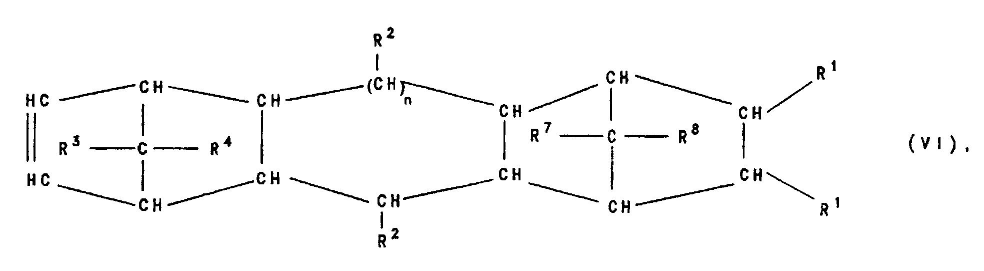 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
0 bis 99 mol-%, bezogen auf die Gesamtzusammensetzung des Cycloolefincopolymers, polymerisierte Einheiten, welche sich ableiten von einem oder mehreren acyclischen Olefinen der Formel VII 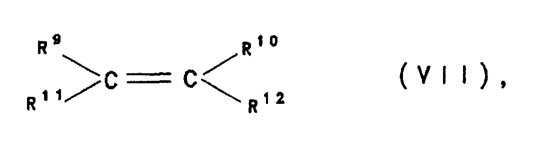 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

2. Elektrete nach Anspruch 1, enthaltend 0 bis 45 mol-%, bezogen auf die Gesamtzusammensetzung des Cycloolefincopolymers, polymerisierte Einheiten, welche sich ableiten von einem oder mehreren monocyclischen Olefinen der Formel VIII 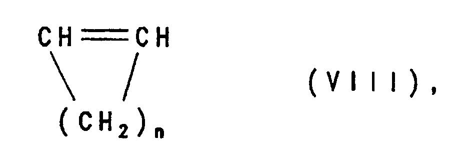 worin n eine Zahl von 2 bis 10 ist.

3. Elektrete nach einem oder mehreren der Ansprüche 1 bis 2, wobei der Anteil der polymerisierten Einheiten, die sich ableiten von polycyclischen Olefinen 3 bis 75 mol-% bezogen auf die Gesamtzusammensetzung des Cycloolefincopolymers beträgt.

4. Elektrete nach einem oder mehreren der Ansprüche 1 bis 3, wobei der Anteil der polymerisierten Einheiten, die sich ableiten von acyclischen Olefinen 5 bis 80 mol-% bezogen auf die Gesamtzusammensetzung des Cycloolefincopolymers beträgt.

5. Verfahren zur Herstellung von Elektreten nach einem oder mehreren der Ansprüche 1 bis 4 auf der Basis einer Cycloolefincopolymer-Folie, wobei auf eine Seite der Folie eine Aluminiumschicht von 50nm bis 200 nm Dicke aufgebracht wird und die Folie auf ihrer nicht metallisierten Seite mit einer Koronaentladung oder durch Beschuß mit einem Elektronenstrahl positiv oder negativ mit einem elektrischen Feld von 5 KV/mm bis 15 KV/mm aufgeladen wird und das Oberflächenpotential im Bereich von 100 V bis 500 V liegt.

6. Verwendung von Elektreten nach einem oder mehreren der Ansprüche 1 bis 4 zur Herstellung von Folien, Fasern und Fliesen.

7. Verwendung von Folien, Fasern und Fliesen nach Anspruch 6 zur Herstellung von Filtern.

## Claims

1. An electret in which the only polymer present is at least one cycloolefin copolymer selected from the group consisting of polymers containing from 0.1 to 100% by weight, preferably from 0.1 to 99.9% by weight, based on the total weight of the cycloolefin polymer, of polymerized units of at least one cyclic olefin of the formulae I, II, II', III, IV, V or VI 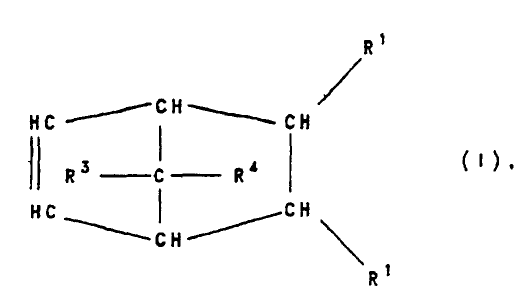 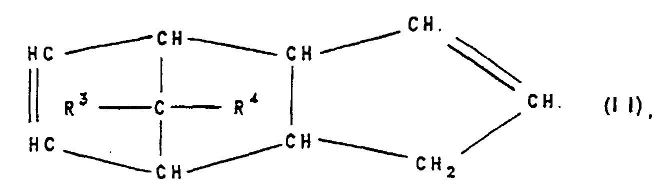 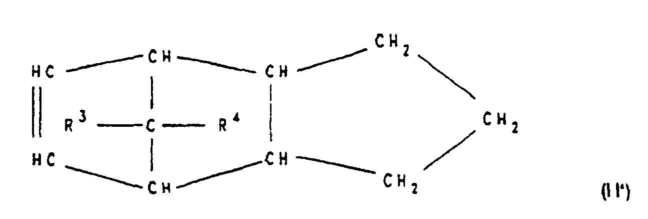 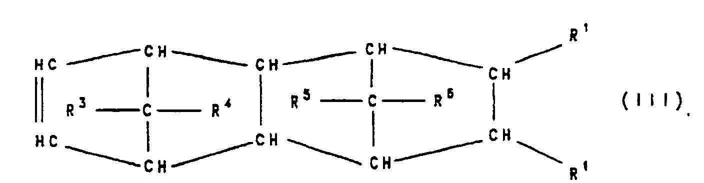 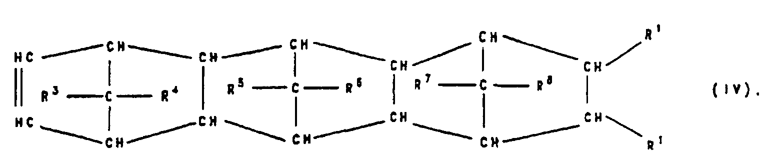 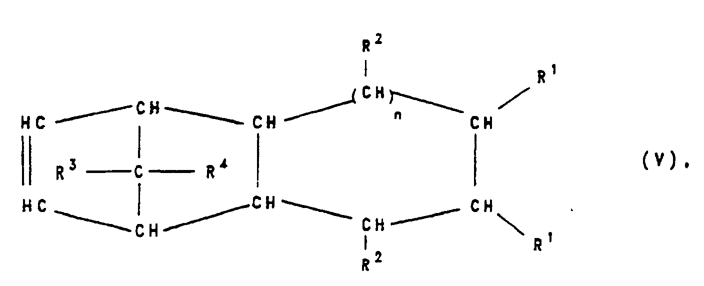 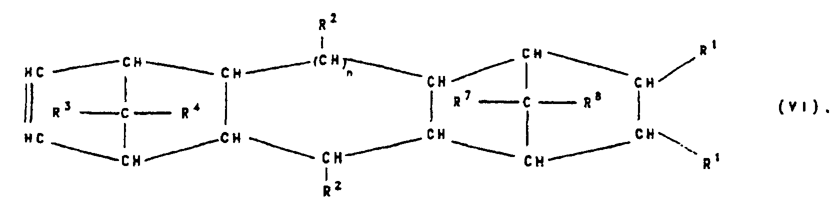 where R¹, R², R³, R⁴, R⁵, R⁶, R⁷ and R⁸ are identical or different and are a hydrogen atom or a C₁-C₂₀-hydrocarbon radical, such as a linear or branched C₁-C₈-alkyl radical, C₆-C₁₈-aryl radical or C₇-C₂₀-alkylenearyl radical,
or a cyclic or acyclic C₂-C₂₀-alkenyl radical, or form a saturated, unsaturated or aromatic ring, where the same radicals R¹ to R⁸ in the various formulae I to VI may have a different meaning, and where n may be from 0 to 5, and
from 0 to 99 mol%, based on the total makeup of the cycloolefin copolymer, of polymerized units which derive from one or more acyclic olefins of the formula VII 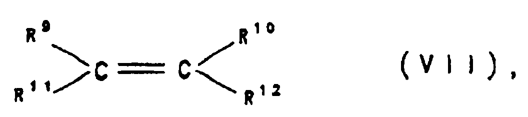 where R⁹, R¹⁰, R¹¹ and R¹² are identical or different and are a hydrogen atom, a linear, branched, saturated or unsaturated C₁-C₂₀-hydrocarbon radical, such as a C₁-C₈-alkyl radical or a C₆-C₁₈-aryl radical.

2. An electret as claimed in claim 1, comprising from 0 to 45 mol%, based on the total makeup of the cycloolefin copolymer, of polymerized units which derive from one or more monocyclic olefins of the formula VIII 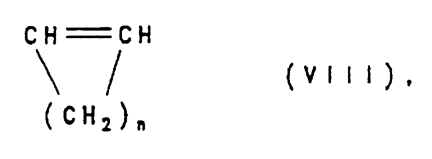 where n is a number from 2 to 10.

3. An electret as claimed in one or both of claims 1 and 2, where the proportion of the polymerized units which derive from polycyclic olefins is from 3 to 75 mol%, based on the total makeup of the cycloolefin copolymer.

4. An electret as claimed in one or more of claims 1 to 3, where the proportion of the polymerized units which derive from acyclic olefins is from 5 to 80 mol%, based on the total makeup of the cycloolefin copolymer.

5. A process for preparing electrets as claimed in one or more of claims 1 to 4 based on a cycloolefin copolymer film, where an aluminum layer of thickness from 50 to 200 nm is applied to one side of the film and the unmetallized side of the film is charged positively or negatively with an electrical field of from 5 to 15 kV/mm with a corona discharge or by bombardment with an electron beam and the surface potential is from 100 to 500 V.

6. The use of electrets as claimed in one or more of claims 1 to 4 for producing films, fibers or nonwovens.

7. The use of films, fibers or nonwovens as claimed in claim 6 for producing filters.

## Revendications

1. Elektret contenant en tant que polymère seulement au moins un polymère de cyclooléfine, sélectionné parmi des polymères contenant 0,1 à 100% en poids, de préférence de 0,1 à 99,9% en poids, par rapport à la masse totale du polymère de cyclooléfine, d'unités polymérisées d'au moins une oléfine cyclique des formules I, II, II', III, IV, V ou VI 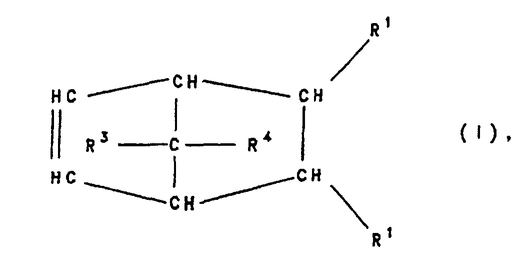 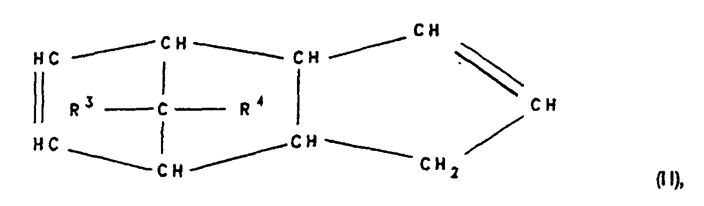 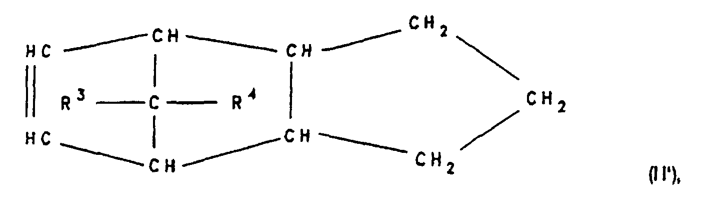 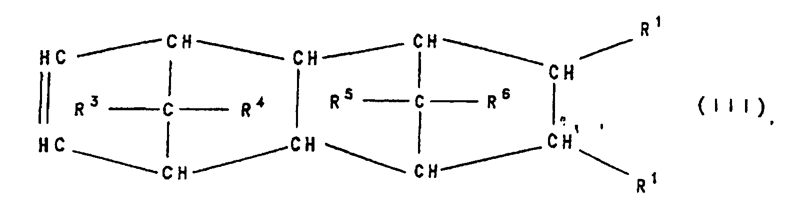 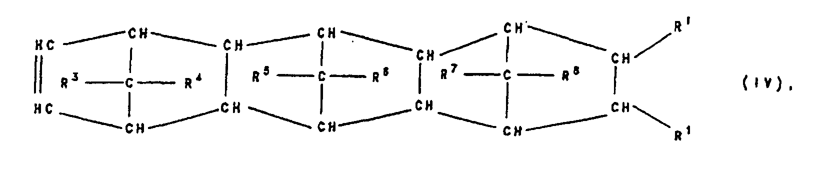 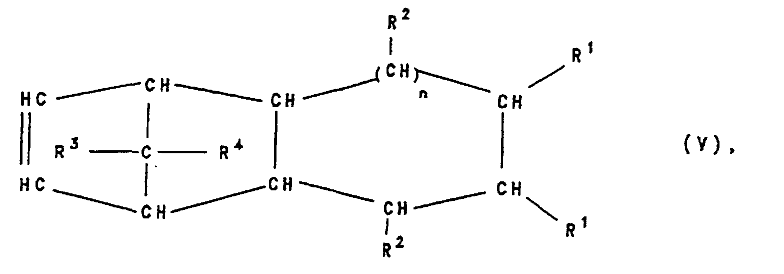 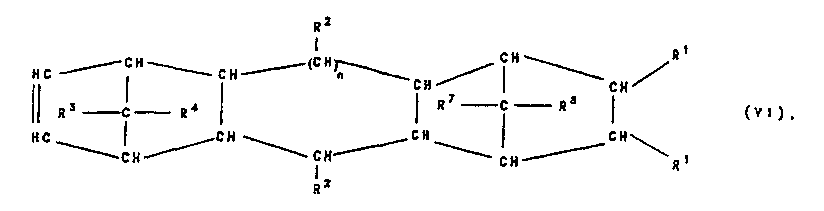 dans lesquelles R¹, R², R³, R⁴, R⁵, R⁶, R⁷ et R⁸ sont identiques ou différents et signifient un atome d'hydrogène ou un radical hydrocarboné en C₁-C₂₀ tel qu'un radical alkyle en C₁-C₈ linéaire ou ramifié, un radical aryle C₆-C₁₈, un radical alkylènaryle en C₇-C₂₀, un radical alcényle en C₂-C₂₀ cyclique ou acyclique, ou forment un cycle saturé, insaturé ou aromatique, des radicaux R¹ à R⁸ identiques pouvant avoir dans les différentes formules I à VI une signification différente, dans lesquelles n peut prendre des valeurs de 0 à 5, et contenant 0 à 99% en mole, par rapport à la composition totale du copolymère de cyclooléfine, d'unités polymérisées qui sont dérivées d'une ou plusieurs oléfines acycliques de formules VII 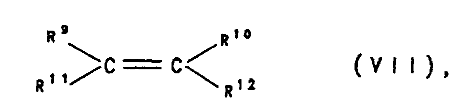 dans laquelle R⁹, R¹⁰, R¹¹ et R¹² sont identiques ou différents et signifient un atome d'hydrogène, un radical hydrocarboné en C₁-C₂₀ linéaire, ramifié, saturé ou insaturé tel qu'un radical alkyle en C₁-C₈ ou un radical aryle C₆-C₁₈.

2. Electrets selon la revendication 1, contenant 0 à 45% en mole, par rapport à la composition totale du polymère de cyclooléfine, d'unités polymérisées qui sont dérivées d'une ou de plusieurs oléfines monocycliques de formule VIII 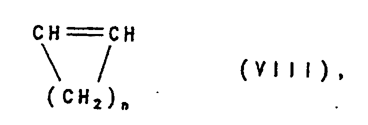 dans laquelle n est un nombre de 2 à 10.

3. Electrets selon l'une quelconque ou plusieurs des revendications 1 à 2, dans lesquels la proportion en unités polymérisées qui sont dérivées d'oléfines polycycliques s'élève à 3 jusqu'à 75% en mole par rapport à la composition totale du copolymère de cyclooléfine.

4. Electrets selon l'une quelconque ou plusieurs des revendications 1 à 3, dans lesquels la proportion en unités polymérisées qui sont dérivées d'oléfines acycliques s'élève à 5% jusqu'à 80% en mole par rapport à la composition totale du copolymère de cyclooléfine.

5. Procédé de fabrication d'électrets selon l'une quelconque ou plusieurs des revendications 1 à 4 sur base d'un film de copolymère de cyclooléfine, dans lequel on applique sur une face du film une couche d'aluminium de 50nm à 200nm d'épaisseur et le film est chargé positivement ou négativement avec un champ électrique de 5KV/mm à 15KV/mm sur sa face non métallisée au moyen d'une décharge Corona ou par bombardement par faisceau électronique et le potentiel en surface se situe dans la plage de 10 à 500V.

6. Utilisation d'électrets selon l'une ou plusieurs des revendications 1 à 4 pour la fabrication de films, de filtres et de voiles.

7. Utilisation de films, de filtres et de voiles selon la revendication 6 pour la fabrication de filtres.
